# EUROPEAN PATENT APPLICATION

(11) **EP 4 604 500 A1**
(43) Date of publication of application: **20.08.2025**
(21) Application number: 25156893.7
(22) Date of filing: 10.02.2025
(51) Int. Cl.: H04L 69/164, H04L 69/22

(54) **ACCELERATED QUIC CONNECTIONS THROUGH HARDWARE COMPONENTS**

(30) Priority: 17.02.2024 US 202418444659
(71) Applicant: Microsoft Technology Licensing, LLC, Redmond, WA 98052 (US)
(72) Inventor: Hire Math, Pragati Medleri, Redmond, WA 98052 (US); Abdelsalam, Ahmed, Redmond, WA 98052 (US); Liu, Raymond, Redmond, WA 98052 (US); Ujwal, Abhipsa, Redmond, WA 98052 (US); Ly-Ma, Daniel, Redmond, WA 98052 (US); Malysh, Alexander, Redmond, WA 98052 (US); Verma, Anshuman, Redmond, WA 98052 (US); Lee, Dongwook, Redmond, WA 98052 (US); Srinivasan, Harish, Redmond, WA 98052 (US)
(74) Representative: Grünecker Patent- und Rechtsanwälte PartG mbB

(57) **Abstract**

According to examples, a hardware component for acceleration of QUIC data packets includes a data store on which is stored a first table and a second table, in which the first table and the second table respectively store information corresponding to a direction in which the QUIC data packets are to flow through a network. The hardware component includes a plurality of logic elements that are to receive information for a QUIC connection, determine a direction of initiation of the QUIC connection, and cause the received information to be stored in one of the first table and the second table depending upon the determined direction of the QUIC connection initiation.

## Description

### BACKGROUND

Quick UDP Internet Connections (QUIC) is a networking protocol that defines a transport layer network protocol that is an alternative to the Transmission Control Protocol (TCP). QUIC may be defined as a transport layer protocol that is built on top of the User Datagram Protocol (UDP) and supports a set of multiplexed connections over the UDP. QUIC attempts to improve performance of connection-oriented web applications that currently use TCP. For example, QUIC connections seek to reduce the number of round trips required when establishing a new connection, including the handshake step, encryption setup, and initial data requests, thereby attempting to reduce latency. QUIC also seeks to improve support for stream-multiplexing.

### BRIEF DESCRIPTION OF DRAWINGS

Features of the present disclosure are illustrated by way of example and not limited in the following figure(s), in which like numerals indicate like elements, in which:
FIG. 1 shows a block diagram of a network environment, in which processing of QUIC data packets is offloaded from a VM to a hardware component, in accordance with an embodiment of the present disclosure;
FIG. 2 depicts a block diagram illustrating network layers, in accordance with an embodiment of the present disclosure;
FIG. 3A depicts a process flow diagram for offloading connection information for a QUIC connection from a VM to a hardware component, in accordance with an embodiment of the present disclosure;
FIG. 3B depicts a process flow diagram for using the offloaded connection information to process QUIC data packets, in accordance with an embodiment of the present disclosure;
FIG. 4 shows a process flow diagram of a manner in which QUIC connection information is offloaded from a VM to a hardware component and a manner in which the hardware component is employed to process QUIC data packets, in accordance with an embodiment of the present disclosure;
FIG. 5 shows a process flow diagram of a manner in which the hardware component processes QUIC data packets, in accordance with an embodiment of the present disclosure;
FIG. 6 depicts a process flow diagram of a manner in which the hardware component encrypts QUIC data packets, in accordance with an embodiment of the present disclosure;
FIG. 7 shows a block diagram of the VM depicted in FIG. 1, in accordance with an embodiment of the present disclosure;
FIG. 8 depicts a flow diagram of a method for offloading processing of QUIC data packets from a virtual machine to a hardware component, in accordance with an embodiment of the present disclosure; and
FIG. 9 depicts a flow diagram of a method for processing QUIC data packets in a hardware component, in accordance with an embodiment of the present disclosure.

### DETAILED DESCRIPTION

For simplicity and illustrative purposes, the principles of the present disclosure are described by referring mainly to embodiments and examples thereof. In the following description, numerous specific details are set forth in order to provide an understanding of the embodiments and examples. It will be apparent, however, to one of ordinary skill in the art, that the embodiments and examples may be practiced without limitation to these specific details. In some instances, well known methods and/or structures have not been described in detail so as not to unnecessarily obscure the description of the embodiments and examples. Furthermore, the embodiments and examples may be used together in various combinations.

Throughout the present disclosure, the terms "a" and "an" are intended to denote at least one of a particular element. As used herein, the term "includes" means includes but not limited to, the term "including" means including but not limited to.

The QUIC protocol seeks to reduce the number of round trips required when establishing a connection between devices, such as between virtual machines (VMs), in a network. During the round trips, there may be a number of operations including a handshake step, an encryption/decryption step, an initial data request, and traffic communication. There are two types of packets communicated under the QUIC protocol, long header packets and short header packets. Long header packets are used during the initial connection establishment to provide connection information, such as, a connection identification (CID), crypto keys, etc. Short header packets are used after the initial connection setup has been completed and are used to transmit data more efficiently, especially for ongoing communications between the devices. Short header packets are also encrypted/decrypted using the corresponding crypto keys for that QUIC connection.

The QUIC protocol is also designed to securely transfer data using UDP datagram and each QUIC server/client pair establishes a QUIC connection, with unique cryptographic information. After connection establishment, 1-RTT (round-trip time) QUIC packets with packet protection deliver application-layer data. For the sender of a 1-RTT QUIC packet, protection entails encrypting the QUIC payload with the negotiated Authenticated Encryption with Associated Data (AEAD) function. It also entails masking the QUIC header using an AES-ECB encrypted sample of the encrypted QUIC payload. For the receiver of a 1-RTT QUIC packet, decryption process involves unmasking the QUIC header, then decrypting the QUIC payload.

In most instances, customers in virtual machines (VMs) initiate QUIC connections and the VMs process the data packets. Particularly, the VMs may execute software to perform processing operations such as encrypting and decrypting the QUIC data packets communicated over a network. Performing these processes may heavily burden the processors and execution of software to perform these processing operations may be relatively inefficient. A technical issue with processing QUIC data packets in software may thus be that encryption and decryption of the QUIC data packets may be relatively slow, which may cause bottlenecks in a network.

Disclosed herein are hardware components that accelerate the processing of QUIC data packets in a network. Also disclosed herein are systems that include the hardware components and methods for accelerating the processing of QUIC data packets. The acceleration of the QUIC data packet processing may be achieved by offloading of the processing operations from software to the hardware components. The offloading includes a communication of QUIC connection information from the software (VM) to the hardware component. The hardware component stores the QUIC connection information in two tables, one in which the entries are addressable using combination of a connection identification (CID) of the QUIC connection, destination IP, and UDP port and the other in which the entries are addressable using a combination of the destination IP and UDP port without the CID of the QUIC connection. In other words, one of the tables includes entries that may be used for processing of QUIC data packets that flow in one direction and the other of the tables includes entries that may be used for processing of QUIC data packets that flow in an opposite direction.

Additionally, when the hardware component receives a short header QUIC data packet, the hardware component uses information contained in the header of the data packet to select one of the tables and to identify an entry in the selected one of the tables to be used to process the data packet. The hardware component also uses information contained in the identified entry to process the data packet, e.g., to encrypt or decrypt the data packet. The hardware component also outputs the processed data packet to the destination identified in the header.

According to examples, by offloading the QUIC data packet processing to the hardware component from software as disclosed herein, a software control complexity and processing burden on the processor of the computing device executing the software is reduced. In addition, host processor resources may be freed up and the overall efficiency of the computing device may be increased. Moreover, the offloading of the processing may also significantly increase network throughput.

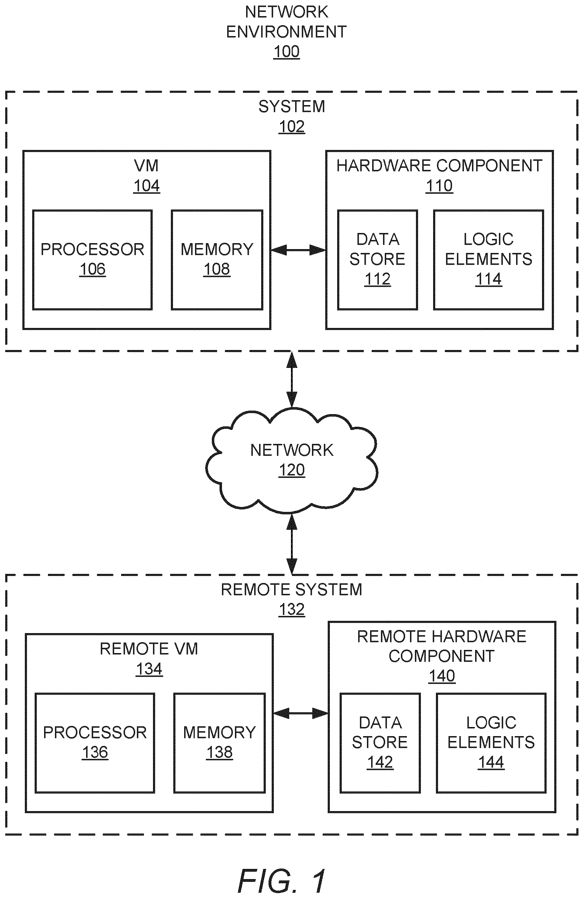

Reference is first made to FIG. 1, which shows a block diagram of a network environment 100, in which processing of QUIC data packets is offloaded from a virtual machine (VM) 104 to a hardware component 110, in accordance with an embodiment of the present disclosure. It should be understood that the network environment 100 and the hardware component 110 may include additional elements and that some of the elements described herein may be removed and/or modified without departing from the scope of the present disclosure.

As shown in FIG. 1, the network environment 100 includes a system 102 for acceleration of QUIC data packet processing by offloading processing of the QUIC data packets from the VM 104 to the hardware component 110. The system 102 includes a VM 104 that may execute software for processing the QUIC data packets for transmission of the QUIC data packets to a remote VM 134 and for receipt of the QUIC data packets from the remote VM 134. In instances in which the VM 104 initiates the QUIC connection with the remote VM 134, the VM 104 may be construed as a client. In instances in which the remote VM 134 initiates the QUIC connection with the VM 104, the VM 104 may be construed as a server. Although the system 102 is depicted as communicating with a remote system 132, it should be understood that the system 102 may communicate with any number of other similar types of remote systems 132.

The VM 104 is depicted as including a processor 106 and a memory 108, which may be construed as the VM 104 having control over a processor 106 and memory of a host device of the VM 104. The memory 108 has stored thereon machine-readable instructions, e.g., software, that the processor 106 may execute to process the QUIC data packets. According to examples and as discussed herein, instead of processing the QUIC data packets through execution of the instructions, the VM 104 offloads the processing operations to the hardware component 110.

The processor 106 is a semiconductor-based microprocessor, a central processing unit (CPU), an application specific integrated circuit (ASIC), a field-programmable gate array (FPGA), and/or other hardware component device. The memory 108, which may also be termed a computer readable medium, is, for example, a Random-Access memory (RAM), an Electrically Erasable Programmable Read-Only Memory (EEPROM), a storage device, or the like. In some examples, the memory 108 is a non-transitory computer readable storage medium, where the term "non-transitory" does not encompass transitory propagating signals. In any regard, the memory 108 has stored thereon machine-readable instructions that the processor 106 executes.

Although the VM 104 is depicted as having a single processor 106, it should be understood that the VM 104 may include additional processors and/or cores without departing from a scope of the present disclosure. In this regard, references to a single processor 106 as well as to a single memory 108 may be understood to additionally or alternatively pertain to multiple processors 106 and/or multiple memories 108. In addition, or alternatively, the processor 106 and the memory 108 may be integrated into a single component, e.g., an integrated circuit on which both the processor 106 and the memory 108 may be provided. In addition, or alternatively, the operations described herein as being performed by the processor 106 are distributed across multiple VMs 104 and/or multiple processors 106.

According to examples, QUIC data packet processing is offloaded from the VM 104 to the hardware component 110 when the QUIC data packets are communicated using the QUIC transport layer protocol. In some examples, the QUIC data packet processing may include crypto (encryption/decryption) operations and/or the like. By offloading the processing to the hardware component 110, software control complexity and processing burden (such as for individual processors) may be reduced. The offloading of the processing may also significantly increase network throughput and reduce processor 106 utilization in the VM 104.

In some examples, the hardware component 110 is positioned near the VM 104. In these examples, the hardware component 110 may communicate with the VM 104 through a local wired or wireless connection, which may be a direct connection or a local network connection. In other examples, the hardware component 110 is mounted within the computing device that hosts the VM 104 and may communicate directly with the processor 106, for instance, through a bus. In yet other examples, the hardware component 110 is remote from the computing device that hosts the VM 104 and the hardware component 110 may communicate with the VM 104 through a network 120. The network 120 may be a local area network or a wide area network, such as the Internet.

The hardware component 110 may be any suitable type of hardware device that may accelerate QUIC data packet processing as compared to the processing being performed by software executed by a processor 106 of the VM 104. Examples of suitable types of hardware components may include field-programmable gate arrays (FGPAs), application-specific integrated circuits (ASICs), program-specific standard products (ASSPs), system-on-a-chip systems (SOCs), complex programmable logic devices (CPLDs), graphics processing units (GPUs), and/or the like. The data store 112 may also be any suitable type of hardware storage device, such as a dynamic random-access memory (DRAM) of the hardware component 110.

Generally speaking, the logic elements 114 are the integrated circuits within the hardware component 110 that perform processing functions in the hardware component 110. In examples in which the hardware component 110 is an FPGA, the logic elements 114 may be programmable logic blocks. In examples in which the hardware component 110 is an ASIC, the logic elements may be logic gates. In any of these examples, the logic elements 114 may perform multiple processing functions simultaneously or concurrently.

The network environment 100 is also depicted as including a remote system 132 that includes a remote VM 134 and a remote hardware component 140. The term "remote" denotes that the system 132, VM 134, and the hardware component 140 are separate and distinct from the system 102, VM 104, and the hardware component 110. According to examples, the remote VM 134 performs operations that are similar to those performed by the VM 104 discussed herein. That is, the remote VM 134 offloads processing of QUIC data packets to the remote hardware component 140. In this regard, the remote hardware component 140 performs operations that are similar to those performed by the hardware component 110 discussed herein. However, the remote system 132 operates as a server when the system 102 operates a client and the remote system 132 operates as a client when the system 102 operates as a server. In other words, when the direction of QUIC connection initiation is from the system 102 to the remote system 132, the system 102 may be construed to be a client and the remote system 132 may be construed to be a server. Likewise, when the direction of QUIC connection initiation is from the remote system 132 to the system 102, the remote system 132 may be construed to be a client and the system 102 may be construed to be a server. According to examples, the descriptions of the VM 104 and the hardware component 110 are equivalently applicable to the remote VM 134 and the remote hardware component 140.

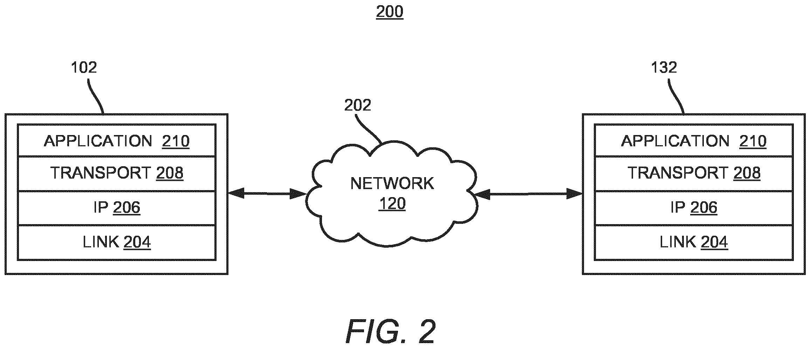

FIG. 2 depicts a block diagram 200 illustrating network layers, in accordance with an embodiment of the present disclosure. As shown, a channel 202 may be established between the system 102 and the remote system 132 via a network 120. The network 202 has a plurality of network layers, illustrated as a link layer 204 (lowest layer), a network layer 206 (illustrated as an Internet Protocol (IP) layer) above the link layer 204, a transport layer 208 (which in various examples is a QUIC transport layer) above the network layer 206, and an application layer 210 above the transport layer 208. The network layers in one example are provided in accordance with a UDP/IP suite utilizing the QUIC transport layer protocol.

The application layer 210 provides process-to-process communication between processes running on different hosts (e.g., general purpose computer devices) connected to the network 120, such as the VMs 104 and 134. The transport layer 208 provides end-to-end communication between different hosts, including providing end-to-end connections(s) between hosts for use by the processes. The network (internet) layer 206 provides routing (e.g., communication between different individual portions of the network 120) via routers. The link layer 204 provides communication between physical network addresses, such as Medium Access Control (MAC) addresses of adjacent nodes in the network 120, such as for the same individual network via network switches and/or hubs, which operate at the link layer 204.

In one example, the channel 202 is an application-layer channel at the application layer 210 of the network 120, established between instances of clients, running on the VMs 104 and 134. That is, the channel 202 is a process-to-process channel between the client instances on the VMs 104 and 134.

The (application-layer) channel 202 in some examples is established via one or more transport layer channels between the VMs 104 and 134, often referred to as end-to-end or host-to-host channel(s). Each transport layer channel is established via network layer channel(s) between one of the VMs 104 and 134 and a router, or between pairs of routers, which are established via link layer channels within the individual networks of, for example, the Internet. It should be noted that the channel 202 may be a unidirectional channel or a bidirectional channel.

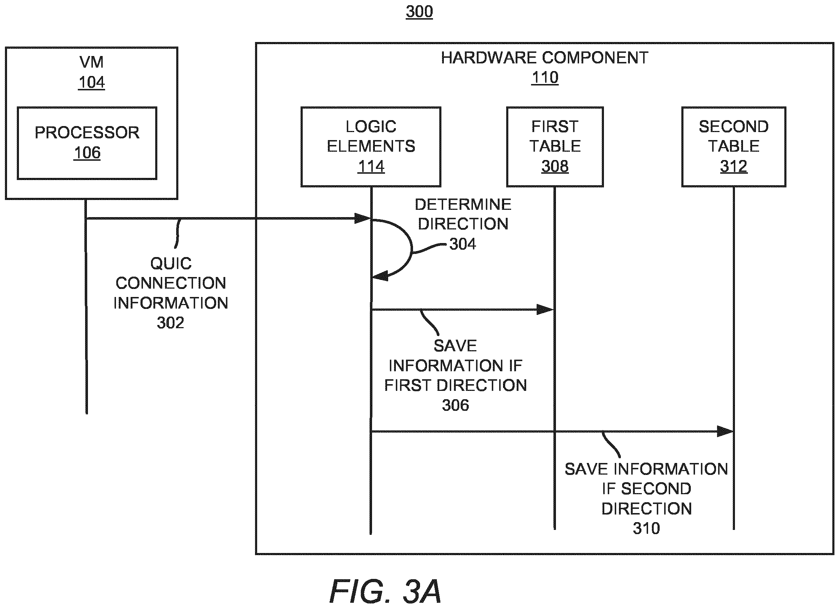

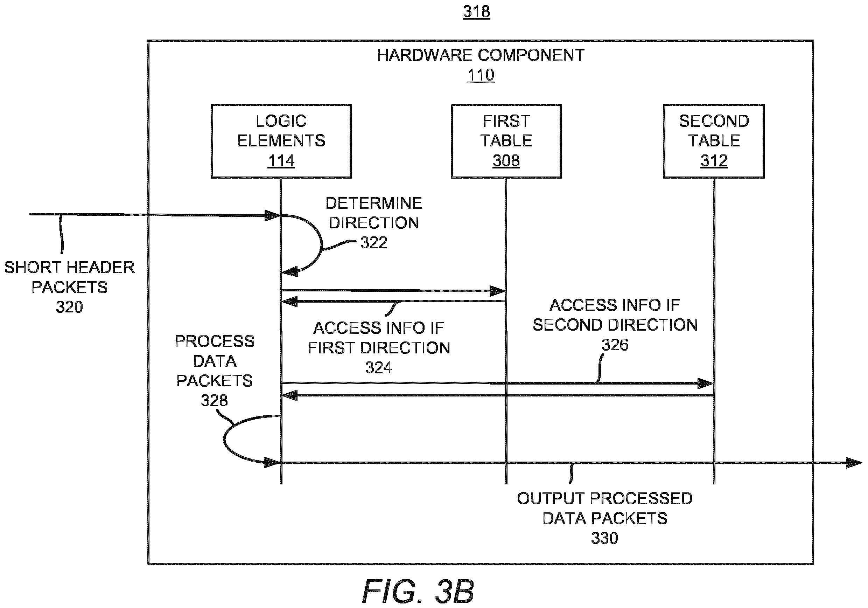

Reference is now made to FIGS. 3A and 3B. FIG. 3A depicts a process flow diagram 300 for offloading connection information for a QUIC connection from a VM 104 to a hardware component 110, in accordance with an embodiment of the present disclosure. FIG. 3B depicts a process flow diagram 318 for using the offloaded connection information to process QUIC data packets, in accordance with an embodiment of the present disclosure. It should be understood that the process flow diagrams 300, 318 respectively depicted in FIGS. 3A and 3B may include additional elements and that some of the elements described with respect to those diagrams 300, 318 may be removed and/or modified without departing from the scopes of the present disclosure. The descriptions of FIGS. 3A and 3B are made with reference to the features shown in FIG. 1 for purposes of illustration.

As shown in FIG. 3A, the VM 104 sends QUIC connection information 302 to the hardware component 110 to offload processing of QUIC data packets to the hardware component 110. Offloading of the processing connection information 302 allows the VM 104 to manage security layer offload to the hardware component 110, which may add an extra layer of security to packet transmission as the communication of crypto details are between the VM 104 and the hardware component 110. According to examples, and as discussed herein, offloading of the QUIC connection information from the VM 104 enables the hardware component 110 to accelerate the processing of QUIC short header packets, such as encryption and decryption of those packets.

In some instances, the VM 104 initiates a QUIC connection by sending one or more QUIC data packets, and particularly, one or more long header QUIC data packets that are to be sent to the remote VM 134, to the hardware component 110. In these instances, the VM 104 may be construed as a client and the remote VM 134 may be construed as a server and the direction of the QUIC connection initiation is from client to server. In other instances, the VM 104 receives a request for initiation of a QUIC connection by receiving one or more QUIC data packets, and particularly, one or more long header QUIC data packets from the remote VM 134. In these instances, the VM 104 may be construed as a server and the remote VM 134 may be construed as a client and the direction of the QUIC connection initiation is from server to client. In either of these instances, the VM 104 sends the QUIC connection information 302 to the hardware component 110, in which the QUIC connection information 302 differs depending upon the direction in which the QUIC connection is initiated.

According to examples, the corresponding QUIC connection information for QUIC connections are offloaded from the VM 104 to the hardware component 110 in the form of a Network Driver Interface Specification (NDIS). The offloaded NDIS structure contains connection information, crypto keys and other information used for completing the encryption and decryption processes in the hardware component 110.

According to examples, for a single QUIC connection, the following QUIC connection information is offloaded from the VM 104 to the hardware component 110.

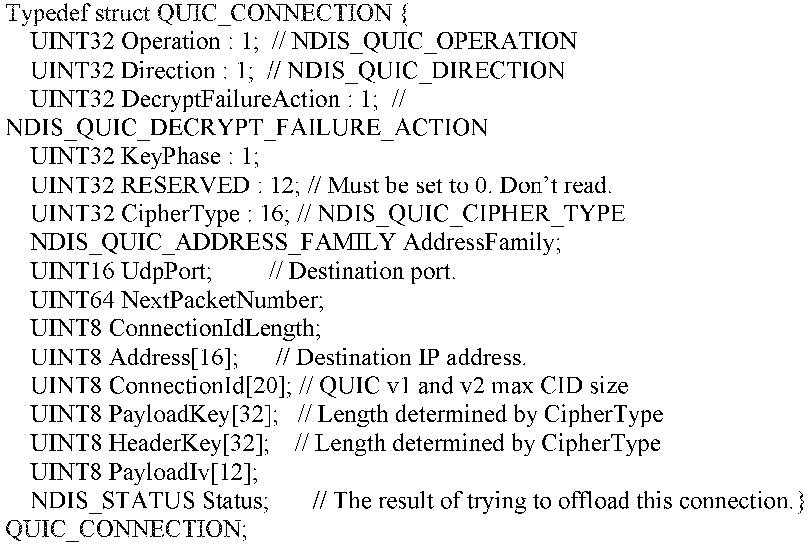

The QUIC connection information listed above includes, among other elements, a ConnectionID (e.g., a connection identification (CID) of the QUIC connection), a PayloadKey and a HeaderKey (e.g., crypto keys used to encrypt/decrypt the QUIC data packets in the QUIC connection), a UdpPort (e.g., the destination port of the QUIC data packets), an Address (e.g., a destination IP address of the QUIC data packets), etc. The VM 104 may offload multiple QUIC connections to the hardware component 110, in which each of the multiple QUIC connections may include respective NDIS information.

As also shown in FIG. 3A, the logic elements 114 of the hardware component 110 determine 304 the direction of the QUIC connection initiation, e.g., whether client initiated the QUIC connection or the server initiated the QUIC connection. In other words, the logic elements 114 may analyze the QUIC connection information 302 to determine whether the VM 104 initiated the QUIC connection or if the VM 104 is the recipient of a request to initiate the QUIC connection. As discussed herein, the logic elements 114 may determine the direction of the QUIC connection initiation based on certain data contained in the QUIC connection information. The data may include a CID length, a UDP port, a destination IP port, and/or the like.

Based on a determination that the QUIC connection initiation direction is in a first direction, e.g., from client to server, that the VM 104 initiated the QUIC connection, or the like, the logic elements 114 may save 306 the QUIC connection information in a first table 308 (also referenced herein as a transmit table 308). Additionally, based on a determination that the QUIC connection initiation direction is in a second direction, e.g., from server to client, that the VM 104 received the QUIC connection initiation, etc., the logic elements 114 may save 310 the QUIC connection information in a second table 312 (also referenced herein as a transmit table 308). As discussed in greater detail herein, the entries in the first table 308 may be addressable using the CID of the QUIC connection whereas the entries in the second table 312 may not be addressable using the CID of the QUIC connection.

The logic elements 114 may similarly cause the information to be stored in the first table 308 and the second table 312 for each of multiple QUIC connections. As a result, for instance, the first table 308 and the second table 312 may include multiple entries, in which the entries in the first table 308 and the second table 312 correspond to respective QUIC connections. In addition, as discussed herein, the QUIC connection information may be entered into the first table 308 or the second table 312 such that the entry containing the QUIC information may be identified through use of information contained in the headers of QUIC data packets, such as through hashing of information contained in the headers. By way of particular example, some of the header information may be hashed to obtain a hash value, in which the hash value may correspond to a particular entry, e.g., row, in the first table 308 or the second table 312.

QUIC data packets have a special feature in that the header information fields change based on the direction in which the QUIC data packets are communicated. For example, ingress QUIC data packets (from a client to a server) have a connection ID (CID) length of non-zero in their headers, which means that there is a CID in their headers. However, egress QUIC data packets (from a server to a client) have a zero length CID in their headers, which means that the egress QUIC data packets do not include a CID (or include a CID having a zero length). In this regard, the first table 308 (from a client to a server) may include a CID of the QUIC connection or may be addressable through use of the QUIC connection CID. However, the second table 312 (from a server to a client) may not include a CID of the QUIC connection and/or may not be addressable through use of the QUIC connection CID.

In some examples, the first table 308 and the second table 312 are hash tables. In other words, a hash function may be used on the QUIC connection information to compute a hash value, in which the hash value may be used to identify a particular entry, e.g., row, in the first table 308 or the second table 312 at which the QUIC connection information is to be stored. As the CIDs in the header differ depending upon the direction of the QUIC connection, the QUIC connection information used in the hash function differs for the hash value used to identify the entry in the first table 308 and the hash value used to identify the entry in the second table 312. As discussed in greater detail below, during lookup into the tables 308, 312, a key is hashed and the resulting hash indicates where the corresponding value is stored in the first table 308 or the second table 312.

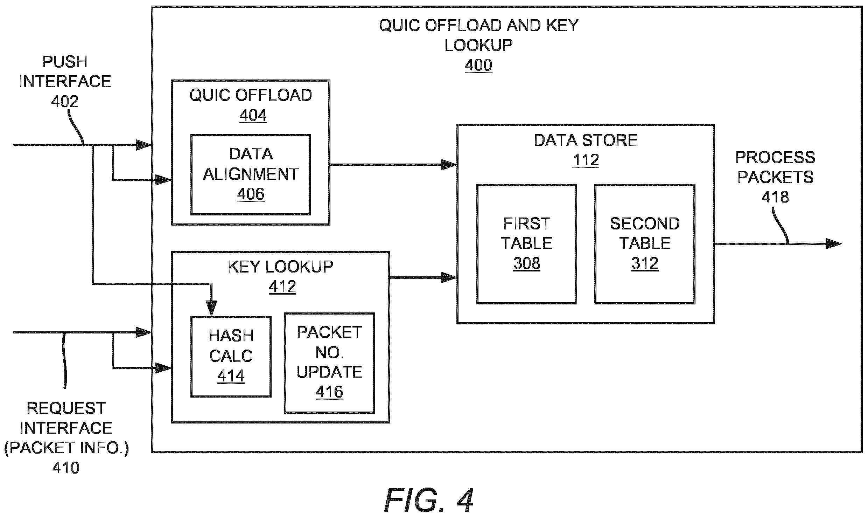

A more detailed description of a manner in which the QUIC connection information is stored in the first table 308 or the second table 312, according to an example, are described with respect to FIG. 4. Particularly, FIG. 4 shows a process flow diagram 400 of a manner in which QUIC connection information is offloaded from the VM 104 to the hardware component 110 and a manner in which the hardware component 110 is employed to process QUIC data packets, in accordance with an embodiment of the present disclosure. It should be understood that the process flow diagram 400 depicted in FIG. 4 may include additional elements and that some of the elements described with respect to that diagram 400 may be removed and/or modified without departing from the scope of the present disclosure.

According to examples, the VM 104 communicates the QUIC connection information 302 to the hardware component 110 through a remote direct memory access network interface controller (RNIC) doorbell interface 402. The RNIC doorbell interface 402 is a PUSH interface with READY latency = = 0. The RNIC doorbell interface 402 may be as follows:

| **Signal name** | **Dir** | **W [b]** | **Description** | |
|---|---|---|---|---|
| dma_rx_update_valid | OUT | 1 | When asserted the signals of this interface are valid. | |
| Dma_rx_update_ready | IN | 1 | When asserted, the client is ready to receive a transfer. | |
| Dma_rx_update_client_id | OUT | 2 | Client ID is identical to the Client Slot Number | |
| dma_rx_client_data_valid | Out | 1 | When 1: the transfer carries client-specific data, written by software in the doorbell action (client doorbell). | |
| | | | Software may send up to 40 bits, which are carried on the interface as follows: | |
| | | | | ▪ data [31:0] is passed on replaces the dma_rx_client_data |
| | | | | ▪ data [39:32] replaces the dma_rx_update_num_wqes_posted |
| | | | When 0: the transfer carries the *num_receive_wqes_posted* written by software in normal doorbell action. | |
| Dma_rx_client_data | Out | 32 | If *client_data valid==*1*,* carries client data [31:0] from doorbell request. | |
| | | | Otherwise, must be 0. | |

According to examples, the push interface 402 is used to send data flits of 32 bits from the VM 104 to the hardware component 110. In instances in which the QUIC connection information 302 offloaded to the hardware component 110 includes 1016 bits, 32 transactions (1016/32) may be performed to send the QUIC connection information 302 from the VM 104 to the hardware component 110.

According to examples, a QUIC connection information offload operation is performed with the QUIC connection information 302 sent through the push interface 402. Particularly, the hardware component 110 includes a QUIC offload module 404 that may perform a data alignment operation 406 on the QUIC connection information 302. The data alignment operation 406 may include aligning the QUIC connection information 302 such as by concatenating the information and determining the direction of the QUIC connection as discussed herein with respect to FIG. 3A. Particularly, the data alignment 406 may include storing the QUIC information 302 in the first table 308 or the second table 312 depending upon the direction in which the QUIC connection is initiated. That is, the first table 308 may store information that may be addressed using header information in QUIC data packets that flow from a client to a server and the second table 312 may store information that may be addressed using header information in QUIC data packets that flow from a server to a client. As discussed herein, a hash calculation 414 may be performed on the QUIC connection information 302 to identify which entry, e.g., row, in the first table 308 or the second table 312, the QUIC connection information 302 is to be stored.

According to examples, each entry of both the first table 308 and the second table 312 contains {NDIS QUIC offload information 302 and a valid bit}. The valid bit may be used to check the validity of an entry. For instance, when the VM 104 offloads the QUIC connection information 302 for a specific QUIC connection, the valid entry bit in the corresponding table is updated to 1 (indicating the entry is valid to read). Whenever there is a valid QUIC offload request coming from the push interface 402, the hardware component 110 checks the direction of this connection and stores it in the corresponding table, either the first table 308 or the second table 312. The hardware component 110 may select the first table 308 or the second table 312 based on the connection ID length in the QUIC connection information 302. Particularly, the first table 308 holds all of the connections with a non-zero length connection ID, and the second table 312 holds all of the connections with a zero length connection ID.

According to examples, the hardware component 110 maintains the two tables 308, 312 to store the QUIC connection information 302 to be used for encryption or decryption of QUIC data packets. For instance, the second table 312 (which may be used in the receive direction) may store a connection ID length of zero and a key based on a destination IP and a destination port of the QUIC connection. In addition, the first table 308 (which may be used in the transmit direction) may store a connection ID length of non-zero and a key based on a destination IP, a destination port, and a connection ID of the QUIC connection.

According to examples, in instances in which the hardware component 110 does not receive sufficient data for a QUIC connection offload, the QUIC connection is flagged as an offload error and the hardware component 110 drops packets corresponding to this connection. In addition or alternatively, in instances in which an entry in the lookup for an incoming packet is not found in one of the tables, the entry is flagged as lookup entry not found and the hardware component 110 drops packets corresponding to this connection.

As shown in FIGS. 3B and 4, the hardware component 110 receives short header packets 320 from either the VM 104 or the remote system 132, for instance, through a request interface 410. The hardware component 110 receives the short header packets 320 from the VM 104 in instances in which the data packets flow from the VM 104 to the remote VM 134. Likewise, the hardware component 110 receives the short header packets 320 from the remote hardware component 140 in instances in which the data packets flow from the remote VM 134 to the VM 104. The logic elements 114 determine 322 the direction of the data packet flow using header information of the short header packets 320 as discussed herein.

If the logic elements 114 determine that the data packet flow is in a first direction, e.g., from client to server, the logic elements 114 select the first table 308 and access 324 information from the first table 308. If the logic elements 114 determine that the data packet flow is in the second direction, e.g., from a server to a client, the logic elements 114 select the second table 312 and access 326 information contained in the second table 312. That is, the logic elements 114 select the first table 308 in instances in which the sender (e.g., the VM 104) is a client and the receiver (e.g., the remote VM 134) is a server. In other words, the logic elements 114 select the first table 308 in instances in which the short header packets 320 include a CID of the QUIC connection (CID=non-zero). Likewise, the logic elements 114 select the second table 312 in instances in which the sender (e.g., the VM 104 ) is a server and the receiver (e.g., the remote VM 134) is a client. In other words, the logic elements 114 select the second table 312 in instances in which the short header packets 320 do not include a CID of the QUIC connection (CID=zero).

In some examples, the logic elements 114 perform a hash calculation 414 (FIG. 4) on the header information to obtain a hash number. In these examples, the logic elements 114 use the hash number to identify the entry in the selected first table 308 or second table 312 corresponding to that hash number. For instance, the logic elements 114 may use the hash number to identify the row in the first table 308 or the second table 312 in which the information is contained. The logic elements 114 may perform the same hash value calculation used during the offload process such that same results may be achieved so long as the information used in both calculations is the same.

According to examples, the logic elements 114 use the accessed information 324 or 326 to process 328 the data packets 320. For instance, the logic elements 114 process the data packets 320 by encrypting or decrypting the data packets 320 using crypto information contained in the accessed information. Particularly, the logic elements 114 encrypt the data packets 320 in instances in which the VM 104 is the sender and decrypt the data packets 320 in instances in which the VM 104 is the receiver of the data packets 320.

The logic elements 114 also output 330 the processed short header packets 320. In instances in which the VM 104 is the sender, the logic elements 114 output 330 the processed, e.g., encrypted, short header packets 320 to the remote system 132. In instances in which the VM 104 is the receiver, the logic elements 114 output 330 the processed, e.g., decrypted, short header packets 320 to the VM 104.

As shown in FIG. 4, the hardware component 110 includes a key lookup module 412 that performs a key lookup operation on the received packet information. Particularly, the logic elements 114 of the hardware component 110 may perform a hash calculation 414 on the packet information to determine a hash value, which the logic elements 114 may use to address one of the first table 308 and the second table 312 as discussed herein. The logic elements 114 may also perform a packet number update 416 on the one or more short header packets 320. The logic elements 114 may further process 418 and output processed one or more short header packets 328.

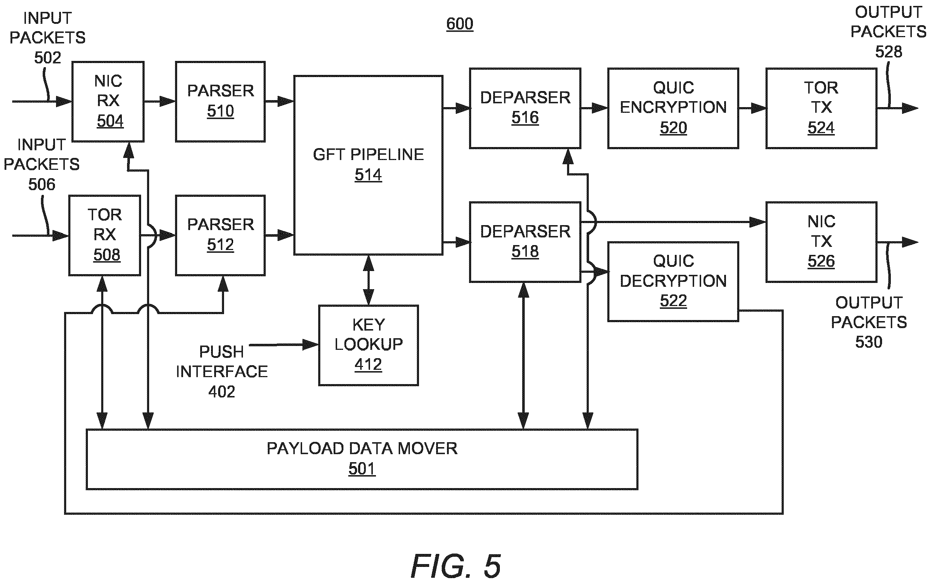

FIG. 5 shows a process flow diagram 500 of a manner in which the hardware component 110 processes QUIC data packets, in accordance with an embodiment of the present disclosure. It should be understood that the process flow diagram 500 depicted in FIG. 5 may include additional elements and that some of the elements described with respect to the diagram 500 may be removed and/or modified without departing from the scope of the present disclosure.

Generally speaking, the incoming packets are parsed in the hardware component pipeline, where the headers are sent to a generic flow table (GFT) pipeline, and the payloads are stored in a data store, e.g., an FPGA memory, by a data mover 501. As shown in FIG. 5, a network interface card receiver (NIC RX) 504 receives input packets 502 from the VM 104 or a top of the rack receiver (TOR RX) 508 receives input packets 506 from the remote system 132 (e.g., the remote hardware component 140). The payload data mover 501 stores the payloads of the input packets 502, 506 in a data store, e.g., the data store 112. In addition, the NIC RX 504 forwards the input packets 502 received from the VM 104 into a parser 510 and the TOR RX 508 forwards the input packets 506 received from the remote system 132 into a parser 512. The parsers 510 and 512 parse the input packets 502, 506 (which may be short header packets 320), for instance, to determine whether the input packets 502, 506 are QUIC packets. According to examples, the QUIC short header format is as follows:

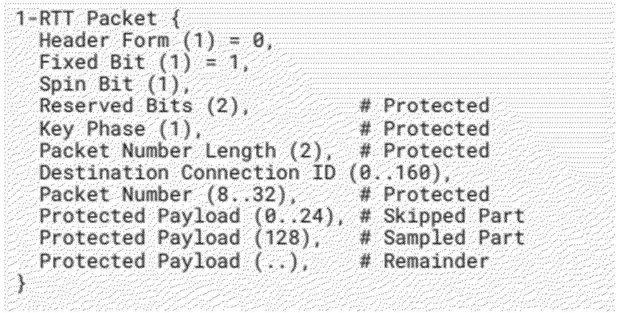

The parsers 510, 512 check for the source/destination UDP port in the L4 headers of the input packets 502, 506. If either source/destination UDP port matches the static UDP port for a QUIC server (Port 4433), then the parsers 510, 512 identify the packet as a QUIC data packet and passes an additional flit as a raw header to include the QUIC header.

Packets identified as QUIC data packets by the parsers 510, 512 are further checked to determine whether the packets are short or long header packets in a pre-processor stage of the GFT pipeline 514. If the packets are determined to be short header QUIC data packets 320, that determination is indicated by asserting a signal in parallel OOB and the additional passthrough headers are forwarded with flow lookup bypassed for these packets. If the packets are determined to be long header QUIC data packets, the packets are sent as passthrough without any indication for QUIC data packets. The headers are also parsed for the following information, which will be sent to the GFT pipeline 514 along with OOB data, which is required for key lookup and encryption.
∘ Packet number
∘ Connection ID for TX packets

Based on the packet direction (Ingress/Egress), the hardware component 110 deduces the Connection ID length as follows.
Ingress: Connection ID length = non-zero
Egress: Connection ID length = 0
Once the connection ID length is determined, and if the connection ID length is non-zero, the connection ID value is obtained accordingly by parsing the packet.

In a QUIC connection, in some examples, both the server and the client maintain a 62-bit packet number, which the server and the client increment when sending a packet. For each packet, the sender may use this number to compute an encryption nonce. However, the receiver only receives a truncated version of this number within the packet. Thus, the receiver maintains an internal 62-bit tracker, which is combined with the truncated packet number to reconstruct the 62-bit packet number. The receiver uses this number to compute the decryption nonce and may update the internal tracker.

In a hardware component 110 (such as a FPGA), QUIC packet number reconstruction logic precedes each encryption/decryption core (e.g., AES-256-GCM encryption/decryption). In accordance with RFC 9000, packet number tracking and reconstruction is performed for decryption. This enables computation of the decryption nonce. Slightly differing from RFC 9000, tracking and reconstruction are also performed for encryption. This may be because the hardware component 110 (such as a FPGA) cannot directly access the 62-bit packet number within the VM QUIC software but uses this number to compute the encryption nonce.

According to examples, the packet number update for the QUIC short header data packets is performed in the key lookup module 412 (FIG. 4) before sending the packet for encryption/decryption. The packet number field from the QUIC short header packet 320 may include only the necessary least significant bytes (LSBs) from the full packet number. In some examples, the full packet number is reconstructed by concatenating the most significant bits (MSBs) from the latest received packet number and the header packet number field. In other examples, the full packet number is constructed similarly, but first subtracting or adding 1 to the MSB from the latest received packet number. The true full packet number is the option closest to the latest. If this true packet number is larger than the latest packet number, it is written back into the data store 112.

The deparsers 516, 518 may perform a reverse process of the parsers 510, 512. Particularly, while the parsers 510, 512 may be responsible for interpreting and converting structured data (such as text or code) into a more abstract representation, the deparsers 516, 518 may do the opposite. The deparsers 516, 518 may take the abstract representation and convert it back into the original structured data format. For instance, the deparsers 516, 518 may convert the data packets into a format suitable for encryption or decryption.

The deparsed data packets may undergo encryption 520 or decryption 522. Particularly, for instance, 1-RTT QUIC data packet encryption and decryption may be accelerated by modifying the GFT pipeline 514 to perform payload encryption/decryption and header masking/unmasking. By way of particular example, the AES-256-GCM function for QUIC payload cryptography is targeted and thus, the AES-256-ECB function is targeted for QUIC header cryptography.

According to examples, the QUIC data packets with preceding cryptographic information, duplicated QUIC headers, and reattached payloads, arrive at one of two cryptographic cores based on the packet direction (from the VM 104 or the network 120). These cryptographic cores have been updated to support QUIC encryption and decryption. Packets directed to the network 120 are first processed by an AES-256-GCM encryption core, then QUIC header masking logic. Packets directed to the VM 104 are first processed by QUIC header unmasking logic, then an AES-256-GCM decryption core.

Following encryption 520, the QUIC data packets may be outputted to a TOR TX 524, which may output the encrypted packets 528, for instance, the remote system 132. However, following decryption 522, the QUIC data packets may be sent back to the parser 512 and the QUIC data packets may be processed through the GFT pipeline 514 as discussed herein. The decrypted QUIC data packets 530 may be outputted through a NIC TX 526, for instance, to the VM 104.

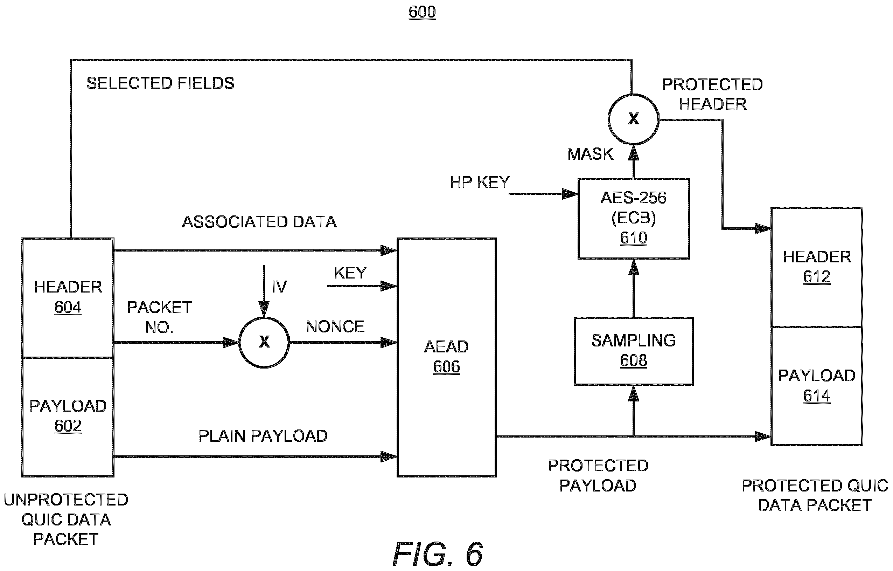

FIG. 6 depicts a process flow diagram 600 of a manner in which the hardware component 110 may encrypt QUIC data packets, in accordance with an embodiment of the present disclosure. It should be understood that the process flow diagram 600 depicted in FIG. 6 may include additional elements and that some of the elements described with respect to the diagram 600 may be removed and/or modified without departing from the scope of the present disclosure.

In some examples, the operations included in the process flow diagram 600 are employed to encrypt both the payload 602 and parts of the header 604 of a QUIC data packet. As shown, information contained in the header 604 is fed as associated data to the AEAD (Authenticated Encryption with Associated Data) 606 algorithms, both the header 604 and the payload 602 are integrity-protected.

To protect a QUIC data packet, the header 604 is first isolated from the payload 602. Then, the payload 602 is encrypted using the negotiated AEAD 606, which takes as input the plaintext padded payload, a key derived from the key exchange using HKDF (HMAC Key Derivation Function), and a nonce (which comes from the XOR of the packet number from the header 604 with an initialization vector (IV), which may also be derived from the key exchange). Then, part of the payload is sampled 608 and used as an input to an encryption algorithm 610. In some setups, the sample is 16 bits long and is encrypted with AES-ECB. The resulting ciphertext is used to mask (with a XOR) several selected fields of the header 604. This procedure aims to protect several fields in the header 604, such as the Packet Number of the QUIC data packet.

A nonce for the payload encryption is generated, for instance, by XORing the packet number of the QUIC data packet with the IV. In some examples, the first header byte, Connection ID and packet number are passed as associated data to the encryption engine (AEAD 606). The 16-byte sample used for header protection is taken from the QUIC data packet after its payload has been encrypted, e.g., 4 bytes after the start of the header's packet number field. The lower 5 bits of the first header byte and all of the bytes of the packet number field are selected for header encryption. The encrypted header 612 is combined with the stored encrypted payload 614 to form the full protected QUIC packet. This protected QUIC data packet is outputted, for instance, to the remote system 132.

According to examples, a protected QUIC data packet is decrypted by going in the opposite direction and performing the operations depicted in FIG. 6 in reverse. In addition, the decrypted QUIC data packet is outputted to the VM 104.

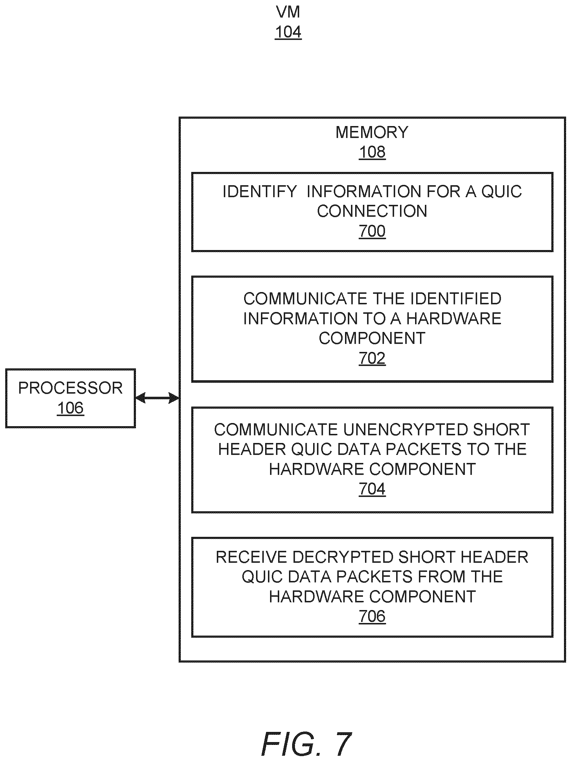

FIG. 7 shows a block diagram of the VM 104 depicted in FIG. 1, in accordance with an embodiment of the present disclosure. It should be understood that the VM 104 may include additional elements and that some of the elements described herein may be removed and/or modified without departing from the scope of the present disclosure. The description of FIG. 7 is made with reference to the features discussed with respect to FIGS. 1-6 for purposes of illustration.

As shown, the memory 108 has stored thereon machine-readable instructions 700-706 that the processor 106 is to execute. Although the instructions 700-706 are described herein as being stored on the memory 108 and thus include a set of machine-readable instructions, the VM 104 may include hardware component logic blocks that may perform functions similar to the instructions 700-708. For instance, the processor 106 may include hardware components that may execute the instructions 700-706. In other examples, the VM 104 may include a combination of instructions and hardware logic blocks to implement or execute functions corresponding to the instructions 700-706. In any of these examples, the processor 106 may implement the hardware logic blocks and/or execute the instructions 700-706.

In some examples, the processor 106 identifies 700 information for a QUIC connection. The information may include header information of a long header QUIC data packet. In addition, the processor 106 communicates 702 the identified information to the hardware component 110, for instance, in the form of a NDIS structure as discussed herein. The processor 106 also communicates unencrypted short header QUIC data packets 320 to the hardware component 110, which the hardware component 110 encrypts as discussed herein. The processor 106 further receives decrypted short header QUIC data packets from the hardware component 110. As discussed herein, the hardware component 110 decrypts the data packets using information contained in the second table 312.

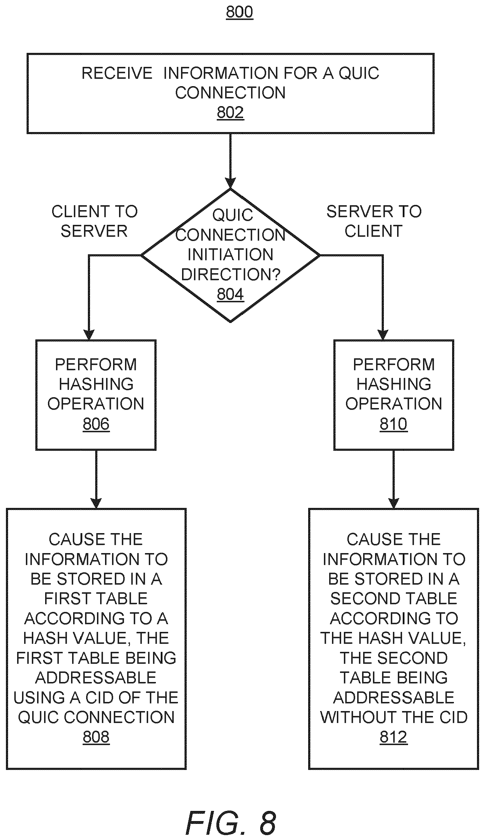

FIG. 8 depicts a flow diagram of a method 800 for offloading processing of QUIC data packets from a VM 104 to a hardware component 110, in accordance with an embodiment of the present disclosure. It should be understood that the operations disclosed with respect to the method 800 are for illustrative purposes and that the method 800 may include additional operations or that some of the operations may be modified or deleted without departing from a scope of the present disclosure. The description of the method 800 is made with reference to the features discussed with respect to FIGS. 1-7 for purposes of illustration.

At block 802, a hardware component 110 receives information for a QUIC connection. The information, e.g., QUIC connection information 302 (FIG. 3A), includes some or all of a connection identification (CID), crypto keys, a destination port, a destination IP address, etc., of the QUIC connection. As discussed herein with respect to FIG. 4, the hardware component 110 may receive the information through a push interface 402. In addition, the hardware component 110 may receive the QUIC connection information such that processing of QUIC data packets is offloaded to the hardware component 110.

At block 804, the hardware component 110 determines a direction of initiation of the QUIC connection. The direction of the QUIC connection initiation is from a client to a server, e.g., from the VM 104 to a remote VM 134, or from a server to a client, e.g., from the remote VM 134 to the VM 104. The hardware component 110 determines the direction from the QUIC connection initiation, such as the CID length and the UDP port identified in the QUIC connection information. For instance, the hardware component 110 determines that the direction of the QUIC connection initiation is from client to server (VM 104 to remote VM 134) in instances in which the CID length is non-zero and the identity of the UDP port. Likewise, the hardware component 110 determines that the direction of the QUIC connection initiation is from server to client (remote VM 134 to VM 104) in instances in which the CID length is zero and the identity of the UDP port.

Based on a determination at block 804 that the QUIC connection initiation direction is from client to server, at block 806, the hardware component 110 performs a hashing operation on some of the information contained in the QUIC connection information, including the CID, to obtain a hash value. The QUIC connection information used in the hashing operation may include the CID, the UDP port, the destination IP address, and/or the like. In addition, at block 808, the hardware component 110 causes the QUIC connection information to be stored in a first table 308 at an entry, e.g., row, corresponding to the hash value. As the CID is used in the hash value calculation, the information is addressable using the CID of the QUIC connection.

Based on a determination at block 804 that the QUIC connection initiation direction is from server to client, at block 810, the hardware component 110 performs a hashing operation on some of the information contained in the QUIC connection information, without including the CID, to obtain a hash value. In addition, at block 812, the hardware component 110 causes the QUIC connection information to be stored in a second table 312 at an entry, e.g., row, corresponding to the hash value. As the CID is not used in the hash value calculation, the information is not addressable using the CID of the QUIC connection.

As discussed herein, the first table 308 and the second table 312 may be stored on a data store 112 of the hardware component 110. By way of example, the data store 112 may be DRAM of the hardware component 110, which may be an FPGA.

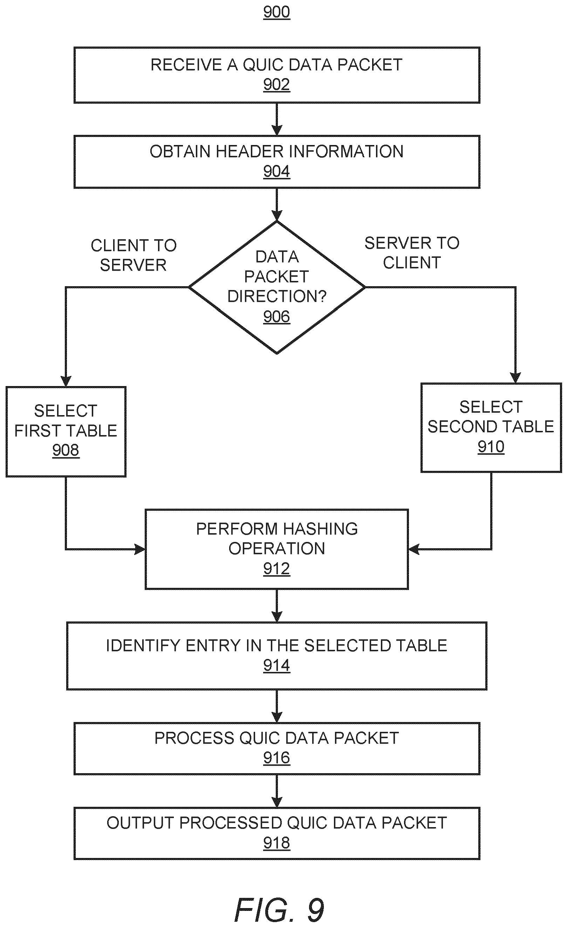

FIG. 9 depicts a flow diagram of a method for processing QUIC data packets in a hardware component 110, in accordance with an embodiment of the present disclosure. It should be understood that the operations disclosed with respect to the method 900 are for illustrative purposes and that the method 900 may include additional operations or that some of the operations may be modified or deleted without departing from a scope of the present disclosure. The description of the method 900 is made with reference to the features discussed with respect to FIGS. 1-7 for purposes of illustration.

At block 902, the hardware component 110 receives a QUIC data packet and at block 904, the hardware component 110 obtains header information of the QUIC data packet. As discussed herein, the hardware component 110 receives the QUIC data packet from the VM 104 or from the remote system 132. In addition, the header information differs depending upon which of the VM 104 and the remote system 132 the hardware component 110 received the QUIC data packet.

At block 906, the hardware component 110 determines the direction at which the QUIC data packet flows. Particularly, the hardware component 110 determines whether the QUIC data packet flows from a client (VM 104) to a server (remote VM 134) or from a server (remote VM 134) to a client (VM 104). The hardware component 110 makes this determination based on the header information, e.g., the CID length, the UDP port, the destination IP address, and/or the like.

Based on a determination at block 906 that the packet flow direction is from client to server, at block 908, the hardware component 110 selects the first table 308. However, based on a determination at block 906 that the packet flow direction is from server to client, at block 910, the hardware component 110 selects the second table 312.

At block 912, the hardware component 110 performs a hashing operation on the header information to obtain a hash number. In addition, at block 914, the hardware component 110 identifies an entry in the selected one of the first and second tables 308, 312, corresponding to the hash number. For instance, the hardware component 110 identifies the row in the selected table that matches the hash number.

At block 916, the hardware component 110 processes the QUIC data packet using the information contained in the identified entry. For instance, the hardware component 110 encrypts the QUIC data packet using an encryption key contained in the identified entry if the QUIC data packet is from the VM 104. As another example, the hardware component 110 decrypts the QUIC data packet using a decryption key contained in the identified entry if the QUIC data packet is from the remote VM 134. At block 918, the hardware component 110 outputs the processed QUIC data packet.

In some examples, some or all of the operations set forth in the methods 800 and 900 are included as utilities, programs, or subprograms, in any desired computer accessible medium. In some examples, the methods 800 and 900 are embodied by computer programs, which may exist in a variety of forms both active and inactive. For example, the computer programs exist as machine-readable instructions, including source code, object code, executable code or other formats. Any of the above, in some examples, are embodied on a non-transitory computer readable storage medium.

Examples of non-transitory computer readable storage media include computer system RAM, ROM, EPROM, EEPROM, and magnetic or optical disks or tapes. It is therefore to be understood that any electronic device capable of executing the above-described functions may perform those functions enumerated above.

Although described specifically throughout the entirety of the instant disclosure, representative examples of the present disclosure have utility over a wide range of applications, and the above discussion is not intended and should not be construed to be limiting, but is offered as an illustrative discussion of aspects of the disclosure.

What has been described and illustrated herein is an example of the disclosure along with some of its variations. The terms, descriptions and figures used herein are set forth by way of illustration only and are not meant as limitations. Many variations are possible within the scope of the disclosure, which is intended to be defined by the following claims -- and their equivalents -- in which all terms are meant in their broadest reasonable sense unless otherwise indicated.

**The following is a list of further preferred embodiments of the invention:**
Embodiment 1. A hardware component for acceleration of quick UDP internet connections (QUIC) data packets, the hardware component comprising:
   a data store on which is stored a first table and a second table, wherein the first table and the second table respectively store information corresponding to a direction in which the QUIC data packets are to flow through a network; and
   a plurality of logic elements to:
      receive information for a QUIC connection;
      determine a direction of initiation of the QUIC connection; and
      cause the received information to be stored in one of the first table and the second table depending upon the determined direction of the QUIC connection initiation.
Embodiment 2. The hardware component of embodiment 1, wherein the plurality of logic elements are to:
   determine a connection identification (CID) length identified in the information;
   determine a user datagram protocol (UDP) port identified in the information; and
   determine the direction of the QUIC connection initiation based on the determined CID length and the determined UDP.
Embodiment 3. The hardware component of embodiment 2, wherein the first table is addressable using the CID of the QUIC connection and the second table is addressable without using the CID of the QUIC connection.
Embodiment 4. The hardware component of embodiment 1, wherein the plurality of logic elements are to:
   perform a hashing operation on the information to obtain a hash value; and
   use the hash value as a row number in the first table or the second table into which the information is stored.
Embodiment 5. The hardware component of embodiment 1, wherein the information for the QUIC connection comprises a connection identification (CID) of the QUIC connection, a destination port, a destination address, an encryption key, and a decryption key.
Embodiment 6. The hardware component of embodiment 1, wherein the plurality of logic elements are to:
   receive a data packet;
   obtain header information about the data packet;
   determine a direction in which the data packet is being communicated through the network;
   select one of the first table or the second table depending upon the determined direction of the data packet communication;
   identify an entry in the selected one of the first table or the second table corresponding to the data packet; and
   use information contained in the identified entry to process the data packet.
Embodiment 7. The hardware component of embodiment 6, wherein the plurality of logic elements are to:
   perform a hashing operation on the header information to obtain a hash number; and
   identify a row number in the selected one of the first table or the second table corresponding to the hash number to identify the entry;
   access information contained in the identified row number; and
   use the accessed information to process the data packet.
Embodiment 8. The hardware component of embodiment 7, wherein the plurality of logic elements are further to:
   perform the hashing operation on the header information using a connection identification (CID) included in the header information based on the determined direction being from a client to a server; or
   perform the hashing operation on the header information without using the CID based on the determined direction being from the server to the client.
Embodiment 9. The hardware component of embodiment 6, wherein the information contained in the selected one of the first table and the second table includes crypto information, and wherein the plurality of logic elements are further to:
   encrypt or decrypt the data packet using crypto information contained in the identified entry to process the data packet.
Embodiment 10. A system for hardware acceleration of quick UDP internet connections (QUIC) data packet processing, the system comprising:
   a hardware component comprising a data store on which is stored a first table and a second table; and
   a virtual machine to:
      communicate information for a QUIC connection to the hardware component,
   wherein the hardware component is to:
      receive the information for the QUIC connection;
      determine whether initiation of the QUIC connection is from a client or a server;
      select one of the first table or the second table based on whether the QUIC connection initiation is from the client or the server;
      identify an entry in the selected one of the first table or the second table corresponding to the data packet; and
      store the information for the QUIC connection in the identified entry of the selected one of the first table or the second table.
Embodiment 11. The system of embodiment 10, wherein the hardware component is further to:
   determine a connection identification (CID) length identified in the information for the QUIC connection;
   determine a user datagram protocol (UDP) port identified in the information for the QUIC connection; and
   determine whether initiation of the QUIC connection initiation is from the client or the server based on the determined CID length and the determined UDP.
Embodiment 12. The system of embodiment 10, wherein the hardware component is further to:
   perform a hashing operation on the information for the QUIC connection to obtain a hash value; and
   use the hash value as a row number in the selected one of the first table or the second table into which the information for the QUIC connection is stored.
Embodiment 13. The system of embodiment 10, wherein each entry in the first table and each entry in the second table contains information and a valid bit that indicates a validity of the entry, and wherein the valid bit is to be changed after valid information for the entry has been entered into the first table or the second table.
Embodiment 14. The system of embodiment 10, wherein the hardware component is further to:
   receive a QUIC data packet;
   obtain header information about the QUIC data packet;
   determine a direction in which the QUIC data packet is being communicated through a network;
   select one of the first table or the second table depending upon the determined direction of the data packet communication;
   identify an entry in the selected one of the first table or the second table corresponding to the QUIC data packet; and
   use information contained in the identified entry to process the QUIC data packet.
Embodiment 15. The system of embodiment 14, wherein the hardware component is further to:
   perform a hashing operation on the header information to obtain a hash number;
   identify a row number in the selected one of the first table or the second table corresponding to the hash number to identify the entry;
   access information contained in the identified row number; and
   use the accessed information to process the QUIC data packet.
Embodiment 16. The system of embodiment 14, wherein the information contained in the selected one of the first table and the second table includes crypto information, and wherein the hardware component is further to:
   encrypt or decrypt the QUIC data packet using crypto information contained in the identified entry to process the QUIC data packet.
Embodiment 17. A method for offloading processing of quick UDP internet connections (QUIC) data packets to a hardware component, the method comprising:
   receiving, by the hardware component, information for initiation of a QUIC connection,
   determining, by the hardware component, a direction of the QUIC connection initiation;
   based on the QUIC connection being initiated in a first direction,
      performing, by the hardware component, a hashing operation of the information to obtain a hash value; and
      causing, by the hardware component, the information to be stored in a first table according to the hash value; or
   based on the QUIC connection being initiated in a second direction,
      performing, by the hardware component, a hashing operation of the information to obtain a hash value; and
      causing, by the hardware component, the information to be stored in a second table according to the hash value.
Embodiment 18. The method of embodiment 17, further comprising:
   determining a connection identification (CID) length identified in the information;
   determining a user datagram protocol (UDP) port identified in the information; and
   determining the direction of the QUIC connection initiation based on the determined CID length and the determined UDP.
Embodiment 19. The method of embodiment 17, further comprising:
   receiving a QUIC data packet;
   obtaining header information about the QUIC data packet;
   determining a direction in which the QUIC data packet is being communicated through a network;
   selecting one of the first table or the second table depending upon the determined direction of the data packet communication;
   identifying an entry in the selected one of the first table or the second table corresponding to the data packet; and
   using information contained in the identified entry to process the data packet.
Embodiment 20. The method of embodiment 19, further comprising:
   performing a hashing operation on the header information to obtain a hash number; and
   identifying a row number in the selected one of the first table or the second table corresponding to the hash number to identify the entry;
   accessing information contained in the identified row number; and
   using the accessed information to process the data packet.

## Claims

1. A hardware component (110) for acceleration of quick UDP internet connections (QUIC) data packets, the hardware component (110) comprising:
a data store (112) on which is stored a first table (308) and a second table (312), wherein the first table (312) and the second table (312) respectively store information corresponding to a direction in which the QUIC data packets are to flow through a network; and
a plurality of logic elements (114) to:
receive (302) information for a QUIC connection;
determine (304) a direction of initiation of the QUIC connection; and
cause (306/310) the received information to be stored in one of the first table and the second table depending upon the determined direction of the QUIC connection initiation.

2. The hardware component of claim 1, wherein the plurality of logic elements are to:
determine a connection identification (CID) length identified in the information;
determine a user datagram protocol (UDP) port identified in the information; and
determine the direction of the QUIC connection initiation based on the determined CID length and the determined UDP.

3. The hardware component of claim 2, wherein the first table is addressable using the CID of the QUIC connection and the second table is addressable without using the CID of the QUIC connection.

4. The hardware component of claim 1, wherein the plurality of logic elements are to:
perform a hashing operation on the information to obtain a hash value; and
use the hash value as a row number in the first table or the second table into which the information is stored.

5. The hardware component of claim 1, wherein the plurality of logic elements are to:
receive a data packet;
obtain header information about the data packet;
determine a direction in which the data packet is being communicated through the network;
select one of the first table or the second table depending upon the determined direction of the data packet communication;
identify an entry in the selected one of the first table or the second table corresponding to the data packet; and
use information contained in the identified entry to process the data packet.

6. The hardware component of claim 5, wherein the plurality of logic elements are to:
perform a hashing operation on the header information to obtain a hash number; and
identify a row number in the selected one of the first table or the second table corresponding to the hash number to identify the entry;
access information contained in the identified row number; and
use the accessed information to process the data packet.

7. A system (102) for hardware acceleration of quick UDP internet connections (QUIC) data packet processing, the system (102) comprising:
a hardware component (110) comprising a data store (112) on which is stored a first table (308) and a second table (312); and
a virtual machine (104) to:
communicate (702) information for a QUIC connection to the hardware component (110),
wherein the hardware component (110) is to:
receive (302) the information for the QUIC connection;
determine (304) whether initiation of the QUIC connection is from a client or a server;
select (306/310) one of the first table or the second table based on whether the QUIC connection initiation is from the client or the server;
identify (306/310)an entry in the selected one of the first table or the second table corresponding to the data packet; and
store (306/310) the information for the QUIC connection in the identified entry of the selected one of the first table or the second table.

8. The system of claim 7, wherein the hardware component is further to:
determine a connection identification (CID) length identified in the information for the QUIC connection;
determine a user datagram protocol (UDP) port identified in the information for the QUIC connection; and
determine whether initiation of the QUIC connection initiation is from the client or the server based on the determined CID length and the determined UDP.

9. A method (800) for offloading processing of quick UDP internet connections (QUIC) data packets to a hardware component (110), the method comprising:
receiving (802), by the hardware component (110), information for initiation of a QUIC connection,
determining (804), by the hardware component (110), a direction of the QUIC connection initiation;
based on the QUIC connection being initiated in a first direction,
performing (806), by the hardware component (110), a hashing operation of the information to obtain a hash value; and
causing (808), by the hardware component (110), the information to be stored in a first table (308) according to the hash value; or
based on the QUIC connection being initiated in a second direction,
performing (810), by the hardware component (110), a hashing operation of the information to obtain a hash value; and
causing (812), by the hardware component (110), the information to be stored in a second table according to the hash value.

10. The method of claim 9, further comprising:
determining a connection identification (CID) length identified in the information;
determining a user datagram protocol (UDP) port identified in the information; and
determining the direction of the QUIC connection initiation based on the determined CID length and the determined UDP.

11. The hardware component of claim 6, wherein the plurality of logic elements are further to:
perform the hashing operation on the header information using a connection identification (CID) included in the header information based on the determined direction being from a client to a server; or
perform the hashing operation on the header information without using the CID based on the determined direction being from the server to the client.

12. The system of claim 8, wherein the hardware component is further to:
perform a hashing operation on the information for the QUIC connection to obtain a hash value; and
use the hash value as a row number in the selected one of the first table or the second table into which the information for the QUIC connection is stored.

13. The system of claim 8, wherein the hardware component is further to:
receive a QUIC data packet;
obtain header information about the QUIC data packet;
determine a direction in which the QUIC data packet is being communicated through a network;
select one of the first table or the second table depending upon the determined direction of the data packet communication;
identify an entry in the selected one of the first table or the second table corresponding to the QUIC data packet; and
use information contained in the identified entry to process the QUIC data packet.

14. The system of claim 13, wherein the hardware component is further to:
perform a hashing operation on the header information to obtain a hash number;
identify a row number in the selected one of the first table or the second table corresponding to the hash number to identify the entry;
access information contained in the identified row number; and
use the accessed information to process the QUIC data packet.

15. The method of claim 9, further comprising:
receiving a QUIC data packet;
obtaining header information about the QUIC data packet;
determining a direction in which the QUIC data packet is being communicated through a network;
selecting one of the first table or the second table depending upon the determined direction of the data packet communication;
identifying an entry in the selected one of the first table or the second table corresponding to the data packet; and
using information contained in the identified entry to process the data packet.
